# EUROPÄISCHE PATENTANMELDUNG

(11) **EP 2 428 137 A1**
(43) Veröffentlichungstag der Anmeldung: **14.03.2012**
(21) Anmeldenummer: 11179900.3
(22) Anmeldetag: 02.09.2011
(51) Int. Cl.: A47B 95/00, F16B 12/20, F16B 5/01

(54) **Beschlag**

(30) Priorität: 09.09.2010 DE 102010037442; 27.09.2010 DE 102010037789
(71) Anmelder: Hettich-Heinze GmbH & Co. KG, 32139 Spenge (DE)
(72) Erfinder: Nolte, Frank, 49086 Osnabrück (DE); Meer, Tobias, 49080 Osnabrück (DE)
(74) Vertreter: Dantz, Jan Henning

(57) **Zusammenfassung**

Ein Beschlag (10), insbesondere zur Montage in einer Leichtbauplatte (1), mit einem Gehäuse, an dem mindestens eine nach außen offene Klebemittelkammer (13) ausgebildet ist, die mit einem im Gehäuse verlaufenden Klebemittelkanal (18) in Verbindung steht, der eine Einlassöffnung zum Anschluss an eine Einspritzdüse für Klebemittel aufweist, wobei an dem Gehäuse ein Befestigungsteil (20) in einer Aufnahme (15) drehbar gelagert ist, wobei zwischen einer Wand (30) der Aufnahme (15) und einer Wand (14, 27) der Klebemittelkammer (13) mindestens ein Spalt (31) als Überlaufkanal für überschüssiges Klebemittel ausgebildet ist.

## Beschreibung

Die vorliegende Erfindung betrifft einen Beschlag, insbesondere zur Montage in einer Leichtbauplatte, nach dem Oberbegriff des Anspruches 1, sowie eine Leichtbauplatte mit mindestens einem solchen Beschlag.

Es ist bekannt, dass Beschläge bei Leichtbauplatten schlecht zu befestigen sind, da eine mit Hohlräumen versehene Mittelschicht, meist eine Wabenplatte, nicht zur Aufnahme von Kräften geeignet ist. Gerade an den Stirnseiten der Platten ergibt sich das Problem, Beschläge auf effektive Weise mit hoher Festigkeit zu fixieren. Bisher wurden Beschläge an einer Innenseite der Deckplatten angeklebt, um eine Verbindung zwischen dem Beschlag und der stabileren Deckplatte zu erhalten. Solche Klebeverbindungen können in der Qualität stark variieren, gerade wenn Luft zwischen einer Deckplatte und dem Klebemittel in einer nach außen offenen Klebemittelkammer in Form eines Kanalsystems, beispielsweise gezeigt in der DE 10 2009 005 596 A1 oder auch in der DE 20 2008 002 540 U1, gelangt. Dieses Kanalsystem wird zwischen dem Beschlag und mindestens einer Deckschicht der Leichtbauplatte ausgebildet. Dabei besteht das Problem, dass bei einem dickflüssigen Klebemittel ein vollständiges Verteilen des Klebemittels in der als Kanalsystem ausgeführten Klebemittelkammer nur schlecht erreicht werden kann. Wird ein zu dünnflüssiges Klebemittel gewählt, dann tritt dieses aus dem Klebemittelkanal nach dem Einspritzen wieder aus, so dass die oben genannten Nachteile durch Eintritt von Luft auftreten.

Es ist daher Aufgabe der vorliegenden Erfindung, einen Beschlag für eine Montage in einer Leichtbauplatte zu schaffen, der eine verbesserte Verklebung ermöglicht, insbesondere auch bei Leichtbauplatten mit geringer Dicke.

Diese Aufgabe wird mit einem Beschlag mit den Merkmalen des Anspruches 1 gelöst. Vorteilhafte Ausgestaltungen ergeben sich aus den Unteransprüchen.

Der Beschlag weist vorzugsweise mindestens eine einteilige Klebekammer auf, die über einen Klebemitelkanal und eine klebemittelrückflussverhindernde Verjüngung im Klebemittelkanal nahe der Eintrittsöffnung zur Klebemittelkammer verfügt. Die Klebemittelkammer ist bevorzugt als ein Behältnis zur Aufnahme von Klebemittel ausgeführt und verfügt über kein Kanalsystem.

Wenn zwei Spalten zwischen einer Klebekammer und einer Aufnahme für das drehbare Befestigungsteil vorgesehen sind, verhindern diese das ungewollte Verkleben des Befestigungsteils und somit einen Funktionsausfall des Beschlags. Ein Spalt kann dabei ringförmig um die Aufnahme des drehbaren Befestigungsteils ausgebildet sein. Insbesondere dieser Bereich wird durch gegenüberliegende Andrückelemente effektiv gegen die innere Oberfläche der Aussparung bzw. Kavität in der Leichtbauplatte gepresst, somit erfolgt eine zusätzliche Abdichtung gegenüber dem Eintritt von Klebemittel in die Aufnahme des Befestigungsteils. Diese Maßnahmen ermöglichen den Einsatz des Beschlags auch bei Leichtbauplatten geringer Dicke.

Die Erfindung wird nachfolgend anhand mehrerer Ausführungsbeispiele mit Bezug auf die beigefügten Zeichnungen beschrieben. Es zeigen:

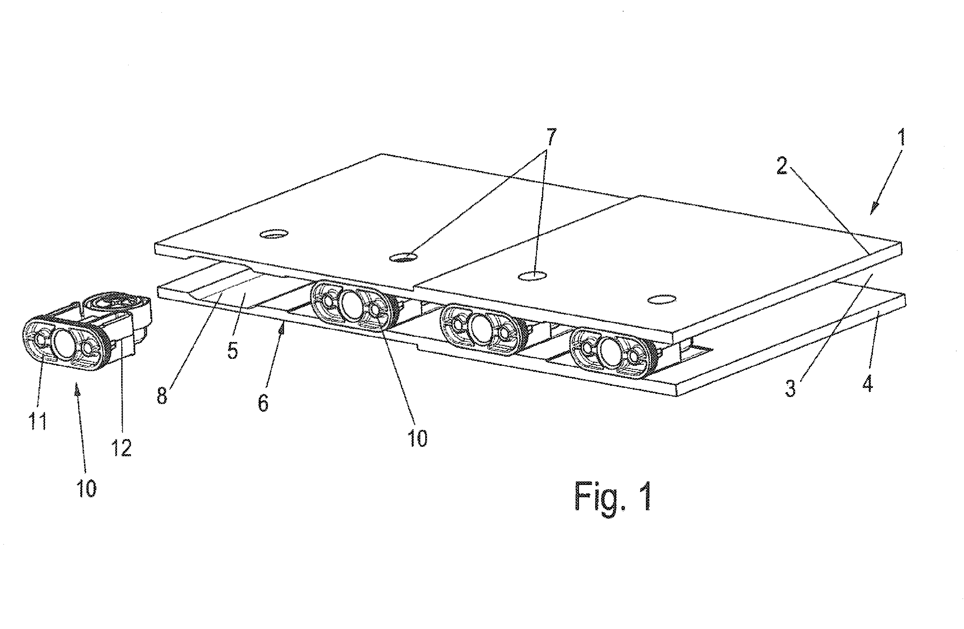

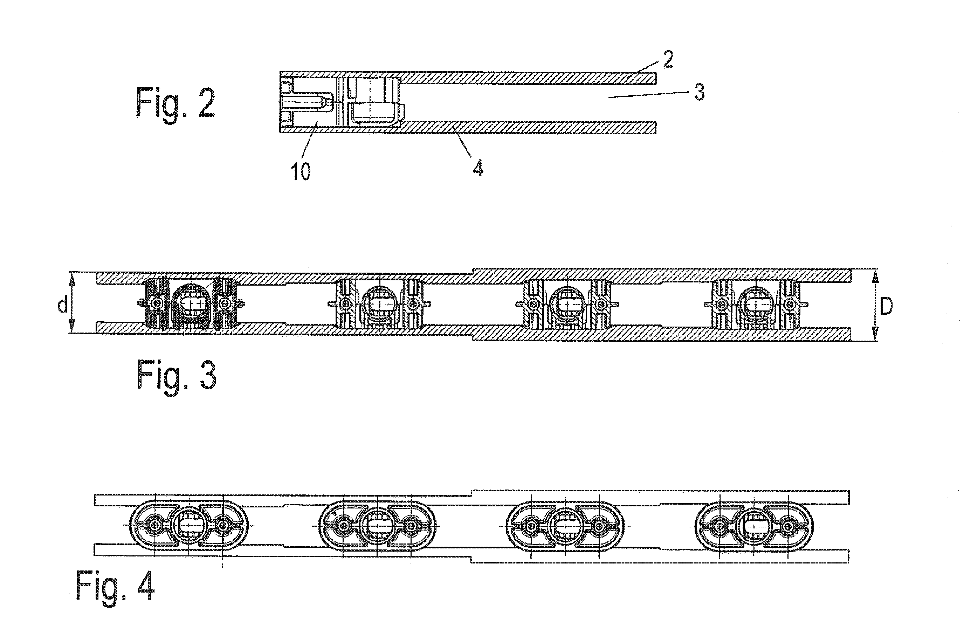

- Figuren 1 bis 4: mehrere Ansichten einer Leichtbauplatte mit einem erfindungsgemäßen Beschlag bei der Montage;

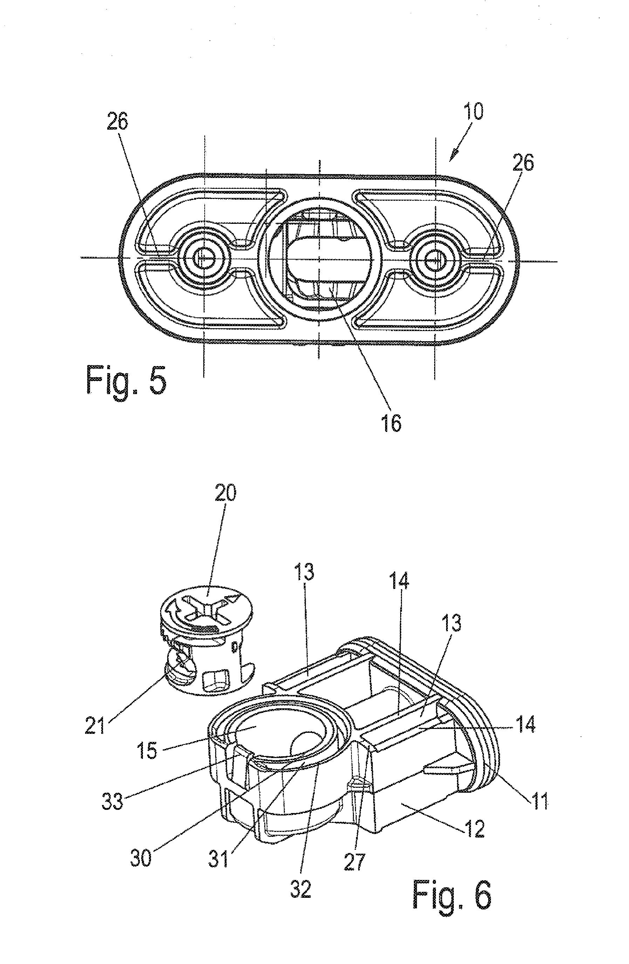

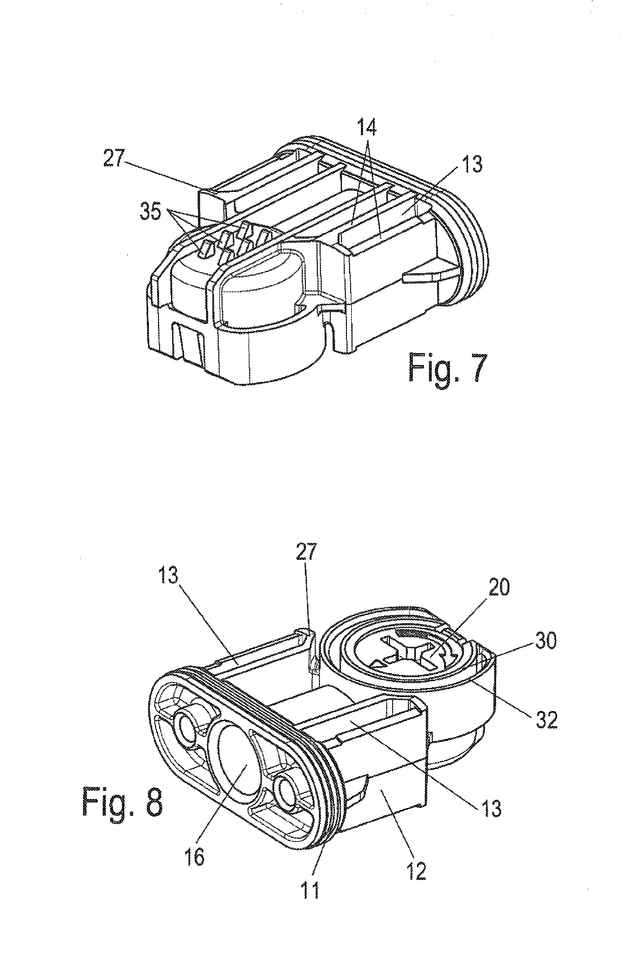

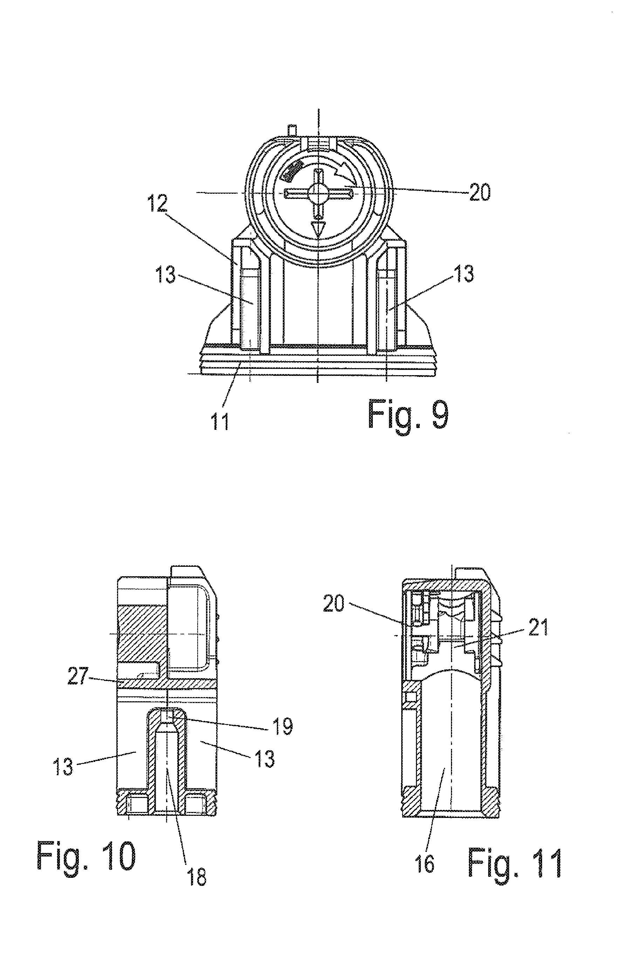

- Figuren 5 bis 11: mehrere Ansichten des Beschlages der Figuren 1 bis 4;
- Figur 12: eine perspektivische Ansicht einer Leichtbauplatte mit einem erfindungsgemäßen Beschlag bei der Verbindung mit einem weiteren Bauteil;
- Figuren 13 und 14: Ansichten einer Einbausituation des erfindungsgemäßen Beschlags in die Stützkante einer Leichtbauplatte.

Eine Leichtbauplatte 1 umfasst zwei äußere Deckplatten 2 und 4, zwischen denen eine Mittelschicht 3 mit Hohlräumen angeordnet ist, die beispielsweise als lUabenplate aus Pappe oder Kunststoff hergestellt ist. Die Deckplatten 2 und 4 können ebenfalls aus Pappe oder Kunststoff hergestellt sein und besitzen eine höhere Festigkeit als die Mittelschicht 3. Die Mittelschicht 3 der Leichtbauplatte 1 weicht in ihren chemischen und/oder physikalischen Eigenschaften von den mindesten zwei Deckplatten 2 und 4 ab. Derzeit sind auch Mittelschichten 3 bekannt, die aus leichten Hölzern wie z.B. Balsa bestehen. Eine weitere Möglichkeit ist, die Mittelschicht 3 aus Fasermaterialien wie z.B. Hanf- oder Strohfasern aufzubauen. Weiterhin können in der Mittelschicht 3 Hohlräume wie z.B. bei Strangpress-Röhrenspanpiatten oder Wabenplatten erzeugt werden. Ferner kann die Mittelschicht 3 als Schaum, insbesondere als Schaumkernplatte ausgebildet sein, Die Deckplatten 2 und 4 der Leichtbauplatte 1 sind darauf ausgelegt, insbesondere Zug- und Druckbelastungen standzuhalten, die Mittelschicht 3 hält bevorzugt Druckbelastungen stand. Die mechanischen Bedingungen sind mit einem DoppelT-Träger vergleichbar. Die Mittelschicht einer Leichtbauplatte wirkt sich weniger auf das Widerstandsmoment der Leichtbauplatte aus, als die Deckplatten.

Um einen Beschlag 10 an einer Stirnseite 6 der Leichtbauplatte 1 zu befestigen, ist eine Aussparung 5 an der Stirnseite 6 eingebracht, die einen rechteckförmigen Querschnitt aufweist. Die Aussparung 5 ist dabei so ausgestaltet, dass mindestens ein Teil der Aussparung die äußeren Deckplatten 2 und 4 an der Innenseite anschneidet. Die Aussparung 5 ist ferner so gestaltet, dass die Kavität in der Leichtbauplatte mit einem Fräser in einem Arbeitsschritt erzeugt werden kann, was zu sehr kurzen Taktzeiten bei der Bearbeitung der Leichtbauplatte führt. Der rechteckförmige Bereich der der Aussparung 5 wird daher von halbkreisförmigen Bereichen zu den Seiten hin abgeschlossen. Somit wird in der Leichtbauplatte 1 die äußere Kontur des Beschlags 10 abgebildet. Die Kontur der Kavität in der Stützkante 36 der Leichbauplatte 1 kann auch als Langloch bezeichnet werden. Die Deckplatten 2 und 4 weisen meist eine Dicke zwischen 1 mm bis 10 mm, insbesondere 2 mm bis 4 mm auf. Die Dicke d bzw. D der Leichtbauplatte 1 setzt sich zusammen aus der Dicke der beiden Deckplatten 2 und 4 sowie der Mittelschicht 3.

Der Beschlag 10 besteht aus Kunststoff oder Metall und umfasst ein Gehäuse mit einem Rand 11, der im wesentlichen passgenau in die durch die Aussparung 5 gebildete Öffnung einfügbar ist, vorzugsweise im Hinblick auf die Dicke mit leichtem Übermaß bemessen ist, zumindest im Bereich von zahnförmigen Vorsprüngen 35. An den Rand 11 schießt sich ein nach innen gerichteter Vorsprung 12 an, der in die Mittelschicht 3 einfügbar ist. An dem Vorsprung 12 sind vier längliche Klebemittelkammern 13 ausgebildet, die an gegenüberliegenden Längsseiten senkrecht zur Stirnseite der Leichtbauplatte 1 durch Längswände 14 begrenzt sind.

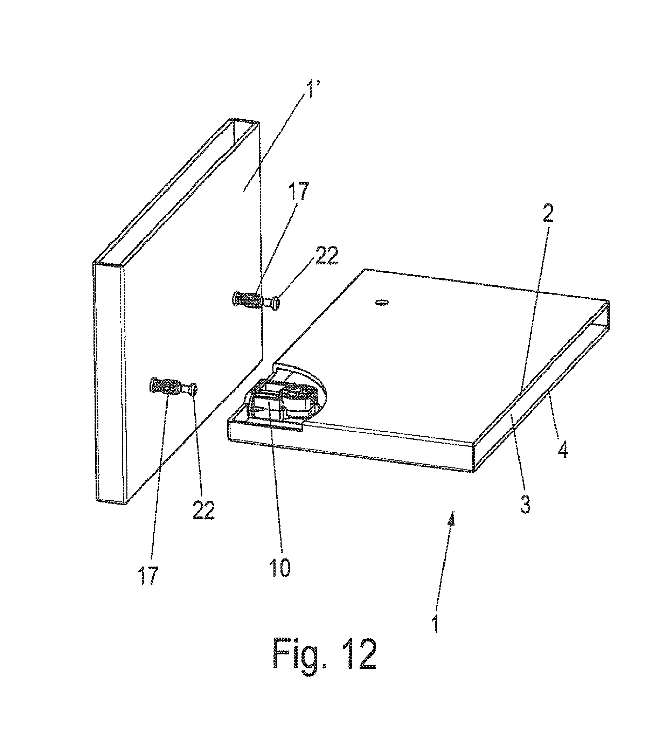

Endseitig an dem Vorsprung 12 ist eine Aufnahme 15 ausgebildet, die nach dem Einfügen des Beschlags 10 in die Aussparung 5 mit einer Öffnung 7 fluchtet, die in die Deckplatte 2 eingebracht ist. Der Beschlag 10 weist ferner ein Rohr 16 auf, das sich senkrecht zur Stirnseite der Leichtbauplatte 1 erstreckt und in das ein metallisches Beschlagteil 17 in Form eines Bolzens einfügbar ist (Figur 12). Das metallische Beschlagsteil 17 umfasst einen Kopf 22, der in Eingriff mit einer Kurvenführung 21 eines Befestigungsteils 20 bringbar ist, um eine klemmende Verbindung zwischen einem mit dem Beschlagsteil 17 gekoppelten Elementen, beispielsweise einer Leichtbauplatte 1, beispielsweise und einer weiteren Leichtbauplatte 1' herzustellen. Der Kopf 22 des Beschlagsteils 17 wird von der Kurvenführung 21 des als Drehelement ausgeführten Befestigungsteils 20 umfasst und durch Drehen des Befestigungsteils 20 form- und/oder kraftschlüssig festgelegt.

Damit der Beschlag 10 mit ausreichender Festigkeit in der Leichtbauplatte 1 festgelegt ist, weist dieser innerhalb des Randes 11 zwei Klebemittelkanäle 18 auf, die seitlich zu dem Rohr 16 angeordnet sind. Die Klebemittelkanäle 18 verjüngen sich innerhalb des Beschlages 10 im Querschnitt, so dass jeweils eine Blende 19 ausgebildet ist, bevor sich der jeweilige Klebemittelkanal 18 zu der zu ihm gehörigen Klebemittelkammer 13 hin öffnet. Die Klebemittelkammern 13 sind nach außen durch einen inneren Wandabschnitt 8 der Aussparung 5 an den Deckplatten 2 bzw. 4 sowie nach innen durch den Beschlag 10, insbesondere die Wände 14 begrenzt. An den Stirnseiten der länglichen Klebemittelkammern 13 sind Wandabschnitte 27 und 28 an dem Beschlag 10 ausgebildet, so dass die Klebemittelkammern 13 weitgehend abgedichtet sind und ein eingespritztes Klebemittel nur geringfügig aus der Klebemittelkammer 13 austritt, Eine geringfügige Leckage ist an dieser Stelle erwünscht und dient dem Austritt der Luft beim Einspritzen des Klebemittels sowie dem Ausgleich von volumenwirksamen Toleranzen durch geringen KlebemittelaustritL und somit dem sicheren Ausfüllen der Klebemittelkammern 13. An den Stehen wo das Klebemittel schnell erstarren bzw. abreagieren soll sind kleine Volumina bzw. kleine Querschnitte vorgesehen insbesondere im Bereich der Blende 19. Somit verhindert der sich dort nach Rückzug der Klebemitteizuführung schnell bildende Pfropfen einen Klebemittelrückfluss durch den Klebemittelkanal 18.

Um ein Festkleben des drehbaren Befestigungsteils 20 durch aus der Klebemittelkammer 13 quellendes Klebemittel zu vermeiden, ist zwischen einer Wand 30 der Aufnahme 15 und einer Wand 14 oder 27 der Klebemittelkammer 13 mindestens ein Spalt 31 als Überlaufkanal für überschüssiges Klebemittel ausgebildet ist. Der ringförmige Spalt 31 um die Aufnahme 15 weist eine Dicke von mindestens 1mm vorzugsweise mindestens 2mm auf. Ferner ist zwischen der Wand 30 der Aufnahme 15 und der Wand 14 oder 27 der Klebemittelkammer 13 eine ringförmige Zwischenwand 32 vorgesehen, wobei zwischen der Zwischenwand 32 und der Wand 30 der Aufnahme 15 ein erster Spalt 31 und zwischen der Zwischenwand 32 und der Wand 14 oder 27 der Klebmittelkammer 13 ein zweiter Spalt 34 ausgebildet ist, was die Sicherheit erhöht, dass kein Klebemittel zu dem scheibenförmigen Befestigungsteil 20 gelangt.

Um das Befestigungsteil 20 in der Aufnahme 15 zu fixieren, ist ein Rastelement 33 in Form einer federnden Lasche vorgesehen, das eine Oberseite auf der zur Öffnung 7 gewandten Seite übergreift.

Die Aussparung 5 in der Leichtbauplatte 1 ist so bemessen, dass das Gehäuse mit mindestens einem zum Boden der Aufnahme gegenüberliegenden Seite angeordneten Vorsprung 35 in das Material der Deckplatte 2 oder 4 eingedrückt wird. Das Gehäuse ist im Bereich der zahnförmigen Vorsprünge 35 im Hinblick auf die Dicke der Aussparung 5 mit Übermaß bemessen. Dadurch wird sichergestellt, dass die Wand 30 der Aufnahme 15 mit Druck gegen die obere Deckplatte 2 gedrückt wird und dadurch eine Abdichtung der Öffnung 7 und der Dichtflächen der Klebekammer erreicht wird.

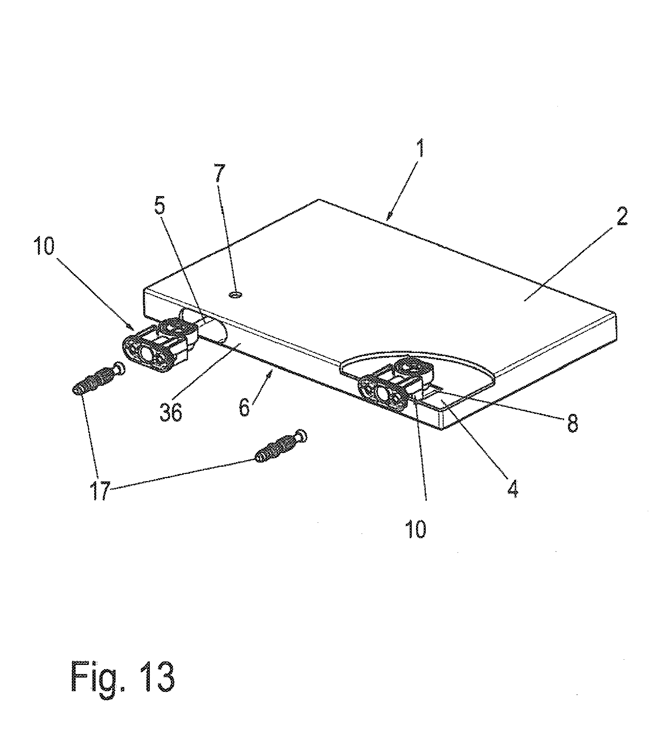

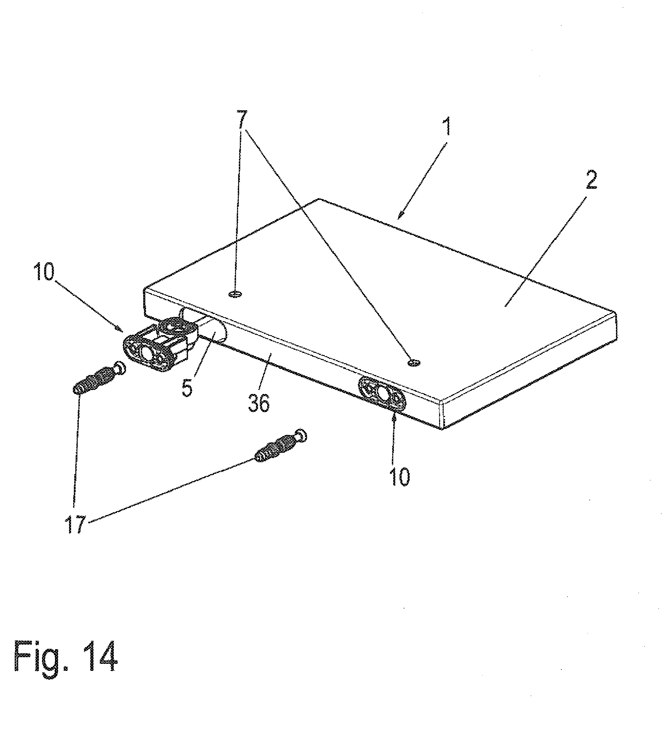

In den Figuren 13 und 14 ist der Beschlag 10 in der Einbausituation in eine Stützkante 36 einer Leichtbauplatte 1 gezeigt. Dies zeigt die besondere Eignung des Beschlages 10 zur Verwendung mir sogenannten riegelfreien bzw. rahmenlosen Leichtbaupiatten 1. Derartige Leichtbauplatten ermöglichen nahezu jedes Format und jede Geometrie aus einer Leichtbaupiatte entsprechend ihrer geplanten Verwendung zu schneiden. Leichtbauplatten müssen daher nicht mehr speziell für einen Verwendungszweck wie z.B. als Türblatt, gefertigt werden. Nach dem Zuschnitt wird die Stützkante 36, bevorzugt durch Kleben, eingebracht. Danach kann die Aussparung 5 für die stirnseitige Einbringung eines Beschlags 10, bevorzugt durch Fräsen, gefertigt werden.

Auf der nach außen gerichteten Seite weist der Beschlag 10 zwei Stege 26 auf, die von einem hier nicht dargestellten Greifer gegriffen werden können, um ein Einfügen des Beschlages 10 in automatisierter Form zu erleichtern.

### Bezugszeichenliste

- 1: Leichtbauplatte
- 1': Leichtbauplatte
- 2: Deckplatte
- 3: Mittelschicht
- 4: Deckplatte
- 5: Aussparung
- 6: Stirnseite
- 7: Öffnung
- 8: Wandabschnitt
- 10: Beschlag
- 11: Rand
- 12: Vorsprung
- 13: Klebemittl-Ilkammer
- 14: Wand
- 15: Aufnahme
- 16: Rohr
- 17: Beschlagsteil
- 18: Klebemittelkanal
- 19: Blende
- 20: Befestigungsteil
- 21: Kurvenführung
- 22: Kopf
- 26: Steg
- 27: Wandabschnitt
- 28: Wandabschnitt
- 30: Wand der Aufnahme
- 31: Erster Spalt
- 32: Zwischenwand
- 33: Rastelement
- 34: Zweier Spalt
- 35: Vorsprung
- 36: Stützkante
- d: Materialdicke
- D: Materialdicke

## Patentansprüche

1. Beschlag (10), insbesondere zur Montage in einer Leichtbauplatte (1), mit einem Gehäuse, an dem mindestens eine nach außen offene Klebemittelkammer (13) ausgebildet ist, die mit einem im Gehäuse verlaufenden Klebemittelkanal (18) in Verbindung steht, der eine Einlassöffnung zum Anschluss an eine Einspritzdüse für Klebemittel aufweist, wobei an dem Gehäuse ein Befestigungsteil (20) in einer Aufnahme (15) drehbar gelagert ist, **dadurch gekennzeichnet, dass** zwischen einer Wand (30) der Aufnahme (15) und einer Wand (14, 27) der Klebemittelkammer (13) mindestens ein Spalt (31) als Überiaufkana! für überschüssiges Klebemittel ausgebildet ist.

2. Beschlag nach Anspruch 1, **dadurch gekennzeichnet, dass** zwischen der Wand (30) der Aufnahme (15) und der Wand (14, 27) der Klebemittelkammer (13) eine Zwischenwand (32) vorgesehen ist, und zwischen der Zwischenwand (32) und der Wand (30) der Aufnahme (15) ein erster Spalt (31) und zwischen der Zwischenwand (32) und der Wand (14, 27) der Klebmittelkammer (13) ein zweiter Spalt (34) ausgebildet ist.

3. Beschlag nach Anspruch 1 oder 2, **dadurch gekennzeichnet, dass** die Klebemittekammer (13) als länglicher Hohlraum ausgebildet ist und an jeder Seite mindestens zwei voneinander beabstandete Klebemittelkammern ausgebildet sind, so dass vorzugsweise vier Klebmittelkammern und zwei voneinander beabstandete Klebemittelkanäle (18) an dem Gehäuse ausgebildet sind.

4. Beschlag nach einem der Ansprüche 1 bis 3, **dadurch gekennzeichnet, dass** an dem Gehäuse ein Rohr (16) zum Einfügen eines Beschlagsteils (17) ausgebildet ist, wobei die Klebemittelkammern (13) seitlich zu dem Rohr (16) angeordnet sind und oberhalb und unterhalb des Rohres jeweils eine Deckplatte (2, 4) einer Leichtbauplatte (1) angeordnet wird.

5. Beschlag nach einem der Ansprüche 1 bis 4, **dadurch gekennzeichnet, dass** das Gehäuse an einer zum Boden der Aufnahme gegenüberliegenden Seite mindestens einen Vorsprung (35) aufweist, der als Andruckraste gegen eine Deckplatte (2, 4) der Leichtbauplatte anlegbar ist.

6. Beschlag nach einem der Ansprüche 1 bis 5, **dadurch gekennzeichnet, dass** das drehbare Befestigungsteil (20) über ein Rastelement (33) in der Aufnahme (15) verrastbar ist.

7. Beschlag nach Anspruch 6, **dadurch gekennzeichnet, dass** das federnde Rastelement (33) als biegbare Lasche ausgebildet ist, die eine Oberseite des Befestigungsteils (20) im verrasteten Zustand übergreift.

8. Beschlag nach einem der Ansprüche 1 bis 7, **dadurch gekennzeichnet, dass** das drehbare Befestigungsteil (20) einen Exzenterabschitt oder einen spiralförmigen Abschnitt zum Anziehen eines Kopfabschnittes (22) eines Befestigungsbolzens (17) aufweist.

9. Leichtbauplatte, mit zwei äußeren Deckplatten (2, 4) und einer Mittelschicht (3) aus einem anderen, insbesondere leichteren, Material als die Deckplatten (2, 4), **dadurch gekennzeichnet, dass** an einer Stirnseite mindestens ein Beschlag (10) nach einem der vorhergehenden Ansprüche verklebt ist.

10. Leichtbauplatte nach Anspruch 9, **dadurch gekennzeichnet, dass** der Beschlag (10) in einer gebohrten oder gefrästen Aussparung (5) in der Leichtbauplatte (1) angeordnet ist und die Deckplatten (2, 4) im Bereich der Aussparung (5) an ihrer Innenseite teilweise ausgespart sind.

11. Leichtbauplatte nach Anspruch 9 oder 10, **dadurch gekennzeichnet, dass** die Leichtbauplatte (1) eine Dicke von weniger als 22mm, vorzugsweise weniger als 20mm, insbesondere weniger als 18mm aufweiset

12. Leichtbauplatte nach einem der Ansprüche 9 bis 11, **dadurch gekennzeichnet, dass** die Aussparung (5) in der Leichtbauplatte (1) so bemessen ist, dass das Gehäuse mit mindestens einem zum Boden der Aufnahme gegenüberlegenen Seite angeordneten Vorsprung (35) in das Material der Deckplatte (2, 4) eingedrückt wird, vorzugsweise das Gehäuse im Hinblick auf die Dicke der Aufnahme mit Übermaß bemessen ist.

13. Leichtbauplatte nach einem der Ansprüche 9 bis 12, **dadurch gekennzeichnet, dass** an dem Gehäuse ein federndes Rastelement (33) zur Festlegung des drehbaren Befestigungsteils (20) ausgebildet ist und das federnde Rastelement (33) auf der zur Stirnseite der Leichtbauplatte (1) abgewandten Seite des Beschlags (10) angeordnet ist.
